Europäisches Patentamt

European Patent Office

Office européen des brevets

(11) Publication number: **0 418 104 B1**

# EUROPEAN PATENT SPECIFICATION

(45) Date of publication of patent specification: **24.05.95**   (51) Int. Cl.6: **B29C 55/04**, B29D 28/00

(21) Application number: **90310103.8**

(22) Date of filing: **14.09.90**

(54) **Geogrids.**

(30) Priority: **14.09.89 GB 8920843**

(43) Date of publication of application:
**20.03.91 Bulletin 91/12**

(45) Publication of the grant of the patent:
**24.05.95 Bulletin 95/21**

(84) Designated Contracting States:
**BE CH DE DK ES FR IT LI NL SE**

(56) References cited:
**US-A- 3 554 853**
**US-A- 4 374 798**

(73) Proprietor: **P.L.G. RESEARCH LIMITED**
**Central Buildings,**
**Richmond Terrace**
**Blackburn,**
**Lancashire BB1 7AP (GB)**

(72) Inventor: **Mercer, Frank Brian**
**"Kenolbri" Meins Road**
**Blackburn,**
**Lancashire (GB)**
Inventor: **Martin, Keith Frazer**
**3 Taskers Croft**
**Wiswell,**
**Lancashire (GB)**
Inventor: **Gardner, Thomas Kenneth**
**29 Whinney Lane,**
**Lammock**
**Blackburn,**
**Lancashire (GB)**

(74) Representative: **Lyndon-Stanford, Edward Wil-**
**loughby Brooke et al**
**MARKS & CLERK,**
**57/60 Lincoln's Inn Fields**
**London WC2A 3LS (GB)**

**Description**

Background of the Invention

The present invention relates to geogrids, which are plastics grid structures made from stretching a starting material having a pattern of holes formed therein, the structures having mesh openings with molecularly-oriented strands on at least two opposite sides, junctions in the structures being at least partly molecularly-oriented. Geogrids are described in, for instance, US 4 374 798 and EP-A-O 374 365.

A uniax geogrid can be considered as a grid formed by parallel, spaced, oriented strands interconnected by interconnecting elements, the interconnecting elements and the respective parts of the strands, which can be loosely termed junctions, forming bars at right angles to the strands. The starting material can be considered as formed of spaced, parallel, continuous longitudinal elements and between the longitudinal elements, interconnecting elements interconnecting the longitudinal elements. The holes are normally on a square or rectangular grid.

As the market acceptance of the uniax geogrid has increased, so has the demand for geogrids of greater strength, and for geogrids having improved economy ratings. HDPE is the preferred raw material for long term applications for uniax geogrids and the Governments of Britain (Agrément Certificate) and the Federal Republic of Germany (Bautechnik Certificate) have issued certificates for such geogrids, which acknowledge that in numerous construction applications they will have a useful life of 120 years. Typical dimensions for uniax geogrids, measured between centres of transverse bars, are 114 mm to 160 mm. Such geogrids exhibit an economy rating in the range of 100 to 120 kN per m per kg of resin per square metre, and the overall stretch ratio during production is usually in the range of 4.5:1 to 5.0:1. It is possible to increase the economy rating by lengthening the apertures which define the zones to be stretched, but this results in greater spacing of the transverse bars; a spacing of say 250 mm is considered to be the upper limit in us ages such as embankments and soil retaining walls. Greater strength can be achieved by increasing the starting material thickness, e.g. up to 6 mm thickness. 6 mm thick starting sheets of high density polyethylene can produce a strength of 110 kN per metre width, but only exhibit an economy rating of 100 kN per m per kg per $m^2$.

There is a strong market demand for geogrids having high strength and a high economy rating.

Apart from the foregoing, it is desirable to be able to increase the overall stretch ratio and the amount of orientation passing through the junctions without a marked tendency for the junctions to split along the centre lines of the strands or in any part of the junctions.

Definitions

The holes in the starting material may be through-holes or blind holes, but if the holes are blind, the base will rupture on stretching.

The term "oriented" means molecularly-orientated. In general, when an orientated strand is referred to, the preferred direction of orientation is longitudinal of the strand.

"Uniax" and "biax" mean uniaxially stretched and biaxially stretched, respectively.

"Thick" refers to the dimension normal to the plane of the starting material or geogrid and "width" refers to the appropriate dimension in the plane of the starting material or geogrid. The thickness of the starting material or of the geogrid is the distance between the extreme faces of the starting material or geogrid, or of the part specified. The minimum thickness of a strand is the thickness of the strand cross-section midway between notional junction zones - this is substantially the same as taking the section of the strand where its thickness is a minimum, for all holes of normal shape.

The "mean thickness" of a zone is the average thickness of the zone, determined by measuring the area of the zone and dividing it by the width of the zone.

The "equivalent thickness" is the thickness of a flat starting material having the same weight per unit area, before forming the holes, it being assumed that the holes are formed by punching or other material removal technique.

The bar length is the distance between transverse tangent lines in the starting material.

The tangent line is a notional line tangent to respective vertical sided holes or mesh openings; if the holes or mesh openings are not vertical sided (ie perpendicular to the plane of the starting material or geogrid), the tangent line is the notional line tangent to the respective equivalent vertical-sided holes or mesh openings. A longitudinal tangent line extends parallel to the longitudinal elements; a transverse tangent line extends parallel to the respective interconnecting elements. In the starting material, the notional junction zone is the zone of the longitudinal element defined between pairs of longitudinal and transverse

2

tangent lines at the junctions between longitudinal elements and interconnecting elements.

The word "uniplanar" means that the material or geogrid is substantially symmetrical about a median plane parallel to its faces. In general, a uniplanar starting material will give a uniplanar geogrid when stretched.

A "flat" starting material has planar, parallel faces.

Sections are taken at right angles to the plane of the starting material or geogrid.

The term "soil" includes rocks, stones, gravel, sand, earth or clay.

The "economy rating" is the strength of the geogrid per unit width per unit mass per unit area, measured as kN per m per kg per $m^2$.

The "strand strength" is the strength of the part of a geogrid strand between the bars.

"HDPE" is high density polyethylene.

A diabolo-shaped hole is a hole having the general shape described in GB-A-2 174 332.

"Grooving" is the cold-forming procedure as or similar to that described in GB-A-2 128 132.

The Invention

The invention applies to geogrids formed from starting materials which have a thickness of at least 6mm at their thickest points. The mean thickness of the longitudinal elements in the starting material is substantially greater than the mean thickness of the interconnecting elements as seen in section along the centre lines of the interconnecting elements, and the area of the longitudinal elements is at least 2.5 times greater than the area of the interconnecting elements as seen in said section. When stretching, stretching is continued until the centres of the notional junction zones have reduced in thickness by at least about 9.6% and stretching is terminated while the percentage reduction in thickness of the centres of the notional junction zones is substantially less than the percentage reduction in thickness of a strand entering the respective notional junction zone, as measured midway between notional junction zones. During stretching, the ends of the interconnecting elements may be oriented in the longitudinal direction.

General

A main advantage of the invention is greatly increased strength per unit weight of geogrid. For instance, a starting sheet of 6 mm equivalent thickness can be profiled in such a manner as to have 10 mm thick longitudinal elements and 2 mm thick interconnecting zones, and give an increase in strength of roughly 50%, 70%, or more compared to equivalent products of US 4 374 798. A strength of about 200 kN per metre width or more, and an economy rating of 170 or more, can be achieved with HDPE.

In general, by profiling the starting material sheet, a major proportion of the plastics material can be located in the longitudinal elements whilst leaving a minor proportion in the interconnecting elements, thereby optimising the use of plastics material to form the load-bearing strands of the geogrid and enabling much higher strength per unit weight of plastics material to be achieved. The use of the thicker longitudinal elements enables the width occupied by the holes to be less, without the whole notional junction zone extending excessively in the longitudinal direction during stretching. Although some longitudinal extension of the notional junction zone is permitted, excessive extension is not desirable and this establishes the minimum width to be occupied by the holes.

In comparison with a flat starting material, material has been transferred from the zones which are not stretched to the zones which are stretched. In addition, if the holes are formed by punching (which is the preferred method), reducing the thickness of the interconnecting zones causes less material to be punched out and recirculated. In general, the holes (as measured at their maximum width) preferably occupy not less than about 25% and/or not more than about 50% of the total width of the starting material, preferably around 37.5%.

The molecular orientation is passed through the notional junction zones so that there is substantially uniaxial orientation running through the whole length of the structure (this means that in every transverse cross-section of the notional junction zone, there is some oriented material: there may also be some unoriented material). The continuity of orientation considerably improves the long term creep resistance (i.e. long term resistance to extension under load) of the structure. The invention enables more orientation to be passed through the notional junction zone.

The orientation is caused to pass more positively through the notional junction zones because the stress during stretching is concentrated in line with the longitudinal elements; there is less stress dissipation compared to a uniax structure of US 4 374 798, because the interconnecting elements are of smaller cross-sectional area and therefore mass. This enables a greater degree of overall orientation (i.e. a greater overall stretch ratio), e.g. of 5.5:1, 6:1 or 6.5:1 or more for HDPE for example, to be achieved.

As more orientation is being passed through the notional junction zone than with flat starting materials such as in US 4 374 798, for a given longitudinal hole length, longitudinal pitch and stretch ratio, there is less orientation in the strands since more plastics material is being drawn out of the notional junction zones. In other words, the degree of orientation passing through the notional junction zone is being controlled. Additional control can be obtained from the width of the hole in any given starting material. In numerical terms, the stretch ratio applied to the mid-point of the notional junction zone, as measured on the surface of the notional junction zone, can be as great as 2.5:1, 3:1 or 3.3:1, with overall stretch ratios of for instance 6:1.

The interconnecting elements constrain the longitudinal elements to orientate less in the notional junction zones than in the strands. In order to achieve this, the interconnecting elements must have sufficient thickness or transverse or longitudinal cross-section or length to influence the orientation of the longitudinal elements, but the interconnecting elements must not have so great a thickness or cross-section as to reduce the directional effect of the longitudinal elements to too great an extent.

Preferably, the ratio of the mean thickness of the longitudinal elements to the mean thickness of the interconnecting elements, is not less than about 1.5:1 or 1.67:1 and more preferably not less than about 1.8:1, or 2:1 or 2.15:1, thereby reducing the constraining effect of the interconnecting elements.

Another measure of the constraining effect of the interconnecting elements is to consider the ratio of the length of the notional junction zone to its mean thickness along the notional longitudinal tangent line. If the notional junction zone is too short, the effect of the interconnecting elements is too little and the notional junction zone may thin down excessively.

A further measure of the constraining effect of the interconnecting elements is to consider a section through the longitudinal element on the centre line of the interconnecting elements, and to consider the ratio of the area of such a section to the area of a section along the longitudinal tangent line. Preferably this ratio (termed the longitudinal/transverse area ratio) is not less than about 1.67:1 or 1.33:1. However, the ratio is preferably not greater than about 6.67:1 or 5:1.

Yet another measure of the constraining effect of the interconnecting elements is to consider the ratio of the width of the longitudinal element to its thickness, as seen in secton along the axis of the centre line of the interconnecting elements. The ratio is preferably no greater than about 2:1 or 1.75 or 1.72:1 or 1.65:1.

It is preferred that during stretching the interconnecting elements do not extend in the longitudinal direction.

For economy, one can consider a section along the centre line of respective interconnecting elements; the ratio of the area of the longitudinal element to the area of the interconnecting element shall be not less than about 2.5:1, and may be not less than about 3.3:1 or 5:1.

The longitudinal element can be of substantially uniform section throughout the starting material (except at locations where clearly defined yield points are formed by grooving, if this is done), but this is not necessarily so. In general terms, the starting material can be formed such that the parts of the longitudinal element which extend across the respective notional junction zones, and preferably for a distance on either side of the notional junction zone, are thicker than the intervening parts and preferably of substantially uniform section, said distance preferably being at least 10% or 20% of the length of the notional junction zone.

The orientation behaviour is believed to be affected by the shaping of the longitudinal element in the notional junction zone (as seen in transverse cross-section).

In general, at least that part of the longitudinal element which is in the notional junction zone (and preferably at least for said distance on either side thereof) may have at least one longitudinally-extending portion which is substantially thicker than at least one lateral edge (and preferably both lateral edges) of that part of the longitudinal element. There may be more than one said longitudinally-extending portion, but there is preferably one, on the centre line of the longitudinal element. The or each portion is preferably spaced from both lateral edges of the longitudinal element. The ratio of the thickness of said longitudinally-extending portion to the thickness of the lateral edges of the longitudinal element is preferably at least about 1.5:1 or 1.8:1 or 2:1 and is preferably not greater than about 3:1 or 5:1 or 7:1. Increasing the thickness of said longitudinally-extending portion appears to permit increase of the stretch ratio whilst maintaining a volume of less orientation in the centre of the notional junction zone, although a significant stretch ratio may be applied to the surfaces of the notional junction zone.

The orientation behaviour may be improved if the innermost area of the notional junction zone, as seen in section, has a lessened influence on, or a lower interference with, the surface areas, allowing the surface areas to stretch further. This can be achieved if said longitudinally-extending portion comprises a longitudinally-extending protuberance or more specifically a projecting rib, on at least one face of the starting material. One possible shape (as seen in transverse section) comprises a protuberance whose sides are more steeply inclined than the surfaces on either side; if radiussing is applied, the sides of the protuberance can be defined in part by concave curves and the top of the protuberance can be defined by a convex curve.

As seen in section along the centre lines of the interconnecting elements, the material between said longitudinally-extending portions can be of uniform thickness, except where grooved, if so grooved. However, the sides of the longitudinal elements, i.e. on either side of the thickest point of the longitudinal element or of said protuberance, preferably slope, e.g. at 15° to about 40° or 45° to the plane of the material, and may slope right down to the thinnest part of the starting material (though preferably with radiussing).

The outer surfaces (ie the tops and bottoms) of the longitudinal elements may be planar and parallel, for production reasons.

As an alternative shape to the rib, the cross-sectional shape of the longitudinal element could be approximately polygonal (e.g. a hexagon or octagon with two opposite sides parallel to the plane of the starting material), preferably approximately regular polygonal or approximately an ellipse or circle. To avoid cracking, any externally concave shape is preferably radiussed.

Preferably, any transverse section through a said longitudinal element has a thickness of at least 6 mm at its thickest part.

The median plane of the interconnecting elements which is parallel to the plane of the starting material is preferably coincident with or internally of the plane of the highest point of the longitudinal element on the respective face, and the interconnecting elements may be wholly within the plane of the highest point of the longitudinal element on the respective face. The longitudinal elements can project from just one side (e.g. with the other side flat), or from each side of the starting material, but preferably the starting material is substantially uniplanar.

As indicated above, stretching has to be continued until the whole length of the longitudinal elements has been oriented, i.e. until there is significant penetration of orientation through the notional junction zones, but stretching must be terminated before there is too great a degree of orientation through the notional junction zones - if there is too great a degree of orientation through the notional junction zones, splitting may occur in use. In practice, the degree of orientation can be obtained by X-ray diffraction tests. A good indication of the orientation ratio can be achieved by measuring the percentage reduction in cross-sectional area or by measuring the increase in spacing between lines marked on the starting material. With longitudinal elements of uniform thickness, the centre of a junction will be substantially thicker than the thinnest part of a strand entering the junction. In general terms, stretching must be terminated while the thickness of the junction on the centre lines of the interconnecting elements or bars is substantially greater (e.g. at least 50%, 75%, 100% greater) than the overall thickness of the thinnest point of the strands entering the junction. In each case, the thickness can be measured on the centre line of the strand. Thus although it is desirable that the whole cross-section of those parts of the strands extending between the junctions should be highly oriented, it is required that the degree of orientation should decrease across the junctions and increase thereafter.

The longitudinal profile of the junction of the preferred uniax geogrid, i.e. as seen in section along the centre line of the strands and normal to the plane of the geogrid, may be different from prior profiles; it is possible that this profile per se contributes to the improved properties of the geogrid. In the notional junction zones of the geogrid, as seen in section normal to the geogrid along the centre line of the respective strand, there is a continuous increase in thickness up to the central zone of the notional junction zone, with no dip in the notional junction zone. The centre of the junction is thinner than the centre of the notional junction zone of the starting material; the thickness is always reduced compared to the starting material, by at least about 9.6% or 10% or 12.5% or 14.8% (say 15%) or 21.2%, and may be reduced by up to about 25% or more.

Clearly defined yield points can be established in the longitudinal elements. Thus, by using say a circular punch or a diabolo-shaped punch, one or two clearly defined yield points can be established at the narrowest point or points of the starting material between adjacent holes. Clearly defined yield points enable the tensile properties of the geogrid to be more clearly defined by ensuring that the ultimate failure position is on the strand, at or near the yield point, and also ensure that the parts of the longitudinal elements between the notional junction zones orient first and thus provide greater control of the penetration of orientation into and through the notional junction zones.

The starting material can be made in any suitable way. It is desirable to profile the starting material (but not necessarily form the holes) at a temperature above or within the melting range, or possibly within the softening range. For instance one can use melt forming in general, Duinat FR-A-368 393, Hureau US 3 252 181, GB-A-969 655, GB-A-1 406 642, Hureau FR-A-2 138 198 or Labarre FR-A-2 131 842. However the preferred method is melt forming by passing a heated web between continuous belts at least one of which is profiled, the holes being formed simultaneously or preferably afterwards by for instance punching; alternatively, the starting material can be formed by extruding directly into a cooling callender roll stack. The starting materials are preferably not oriented, but this does not exclude the presence of melt-flow orientation, which can be ignored; melt-flow orientation includes any orientation that occurs as an extruded plastics material, immediately after extrusion, is expanded before reaching a mandrel and/or expanded over a mandrel.

Biax Geogrids

Market forces clearly show that in the strength range of 40 kN to 60 kN per metre width for uniax geogrids, there would be substantial practical advantages in use if geogrids could be created which were in the width range of 2.5 m to 4 m with the primary strength extending longitudinally of the geogrid. This has been impractical because of the difficulty and the extremely high costs involved in creating precisely apertured starting materials and uniaxial stretching machines having a width greater than 1.5 m.

It has been discovered that the starting materials of the invention give significant advantages when producing biax geogrids. When the uniax structure of the invention is stretched e.g. 1.5:1 to 3:1 overall in the direction at right angles to the first stretching direction, the reduced section of the interconnecting elements causes orientation to be initiated in the interconnecting elements and the orientation can be controlled in order to prevent its penetration into the notional junction zones. This means that the structure can be widened without disturbing the performance of the strands in the direction of first stretch. When producing the biax geogrids, the stretching in the two directions can be carried out simultaneously or the interconnecting elements could be stretched before stretching the longitudinal elements; however, it is preferred to stretch the interconnecting elements after the longitudinal elements, and it is also preferred to have the longitudinal elements extending in the machine direction.

Preferred Embodiments

The invention will be further described, by way of example, with reference to the accompanying drawings, in which:-
Figure 1 is an isometric view of a starting material;
Figure 2 is a section along the plane II-II in Figure 1;
Figure 3 is an isometric view of the uniax geogrid formed by stretching the starting material of Figure 1 uniaxially;
Figure 4 is a section along the plane IV-IV in Figure 3 (transverse tangent line section);
Figure 5 is a section along the plane V-V in Figure 3 (bar centre line section);
Figure 6 is an isometric view of the biax geogrid formed by stretching the geogrid of Figure 3 at right angles to the first stretching direction;
Figure 7 is an enlarged plan view of a junction of the mesh structure of Figure 6;
Figures 8 to 14 correspond to Figures 1 to 7, but show a different starting material and geogrids;
Figures 15 to 19 correspond to Figures 1 to 5, but show another different starting material and uniax geogrid;
Figures 20 to 22 correspond to Figures 3 to 5, but show a geogrid made from the starting material of Figure 32, but without grooving;
Figures 23 to 32 are cross-sections through other starting materials, taken in a plane corresponding to the plane II-II indicated in Figure 1;
Figure 33 shows hole shapes that can be used;
Figures 34 and 35 are schematic elevations of two different plants for producing the profiled starting material for the invention; and
Figure 36 is a vertical section through an embankment, illustrating the use of a geogrid of the invention.

For general procedures regarding stretching, reference can be made to US 4 374 798. Where appropriate, the passage in US 4 374 798, column 10, lines 7-60 is applicable to the present invention.

All the embodiments given below are taken from the centre portion of laboratory samples; except where otherwise indicated, for the first or only stretch the degree of transverse restraint is equivalent to a transverse contraction of up to 15%, which is substantially the order of restraint expected in manufacture when the stretch is in the machine direction (as is normal).

Throughout the drawings, the same references indicate equivalent items.

Figures 1 to 5

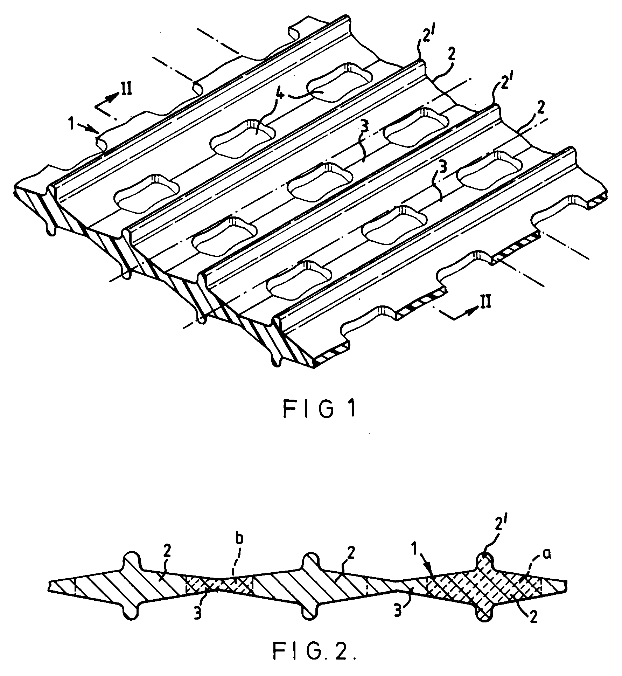

The starting material 1 shown in Figure 1 is strictly uniplanar, is formed of HDPE and has spaced, parallel, uninterrupted or continuous longitudinal elements 2 and, between the elements 2, thinner interconnecting elements 3. The interconnecting elements 3 extend between through-holes 4 formed by punching the thinner material interconnecting the elements 2. The centres of the holes 4 are on a notional square grid two of whose sides are parallel to the elements 2. Figures 1 and 2 show that the holes 4 can be formed wholly in a part which is not parallel faced. Notional longitudinal and transverse tangent lines are indicated with dash-dot lines in Figure 1 and define notional junction zones. As can be seen in Figure 2, each longitudinal element has on each face a marked rib 2' which forms a thicker longitudinally-extending portion or central protuberance, spaced from both lateral edges (longitudinal tangent lines) of the longitudinal element 2. On either side, the ribs 2' are radiussed into surfaces which slope at about 10° to the median plane. The thickness of the centre of the longitudinal element 2 is about 300% more than its thickness at the longitudinal tangent line (its lateral edge). The interconnecting elements 3 are formed of portions which continue the slope of the longitudinal element 2.

The transverse section, shown in Figure 2, is notionally divided into a first zone a through the longitudinal element 2 and a second zone b through the interconnecting element 3; in other words, the second zone b is a projection of the widest part of the hole 4. The a:b area ratios and the a:b mean thickness ratios are given in Table 1 for Figure 2 and for other Figures.

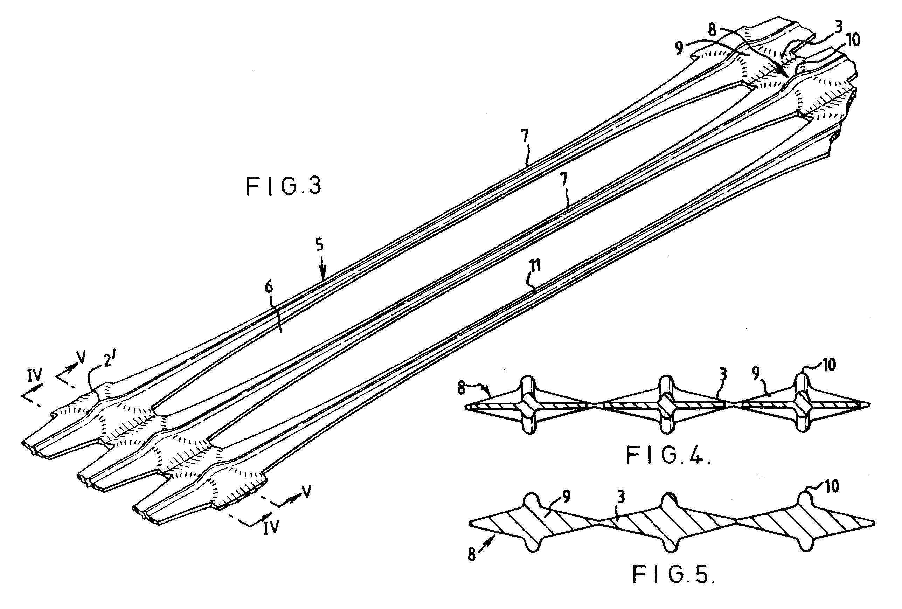

The starting material 1 was stretched longitudinally to an overall stretch ratio of 6:1 (about 11:1 on the strands), producing the uniax mesh structure or geogrid 5 of Figure 3. The geogrid 5 has mesh openings 6 formed from the holes 4 and defined by a grid of oriented, parallel strands 7 formed from the longitudinal elements 2 of the starting material 1 and bars 8 at right angles to the strands 7; the bars 8 are formed by the interconnecting elements 3 and the respective parts of the strands 7. Some of the plastics material that was in the starting material notional junction zone is pulled out into the parts of the strands 7 between junctions 9; the junctions 9 also form part of the strands 7. The overall stretch ratio is such that the whole length of the longitudinal elements 2 has been substantially uniaxially oriented. The orientation extends substantially parallel to the axes of the strands 7 throughout the length of the strands 7 and throughout the length of the geogrid 5. The overall stretch ratio is also such that the thickness of the strands 7 on the centre lines of the bars, specifically at the mid-points 10 of the junctions 9, is substantially greater than the thickness of the strands 7 at 11, mid-way between adjacent notional junction zones or bars. In the notional junction zones of the geogrid 5, as seen in section normal to the geogrid 5 along the centre line of the respective strand 7, there is a continuous increase in thickness up to the central zone of the notional junction zone, with no dip in the notional junction zone. The effect of the lobes formed by the ribs 2' is to increase the orientation over the junction 9, at least on the surfaces of the junction 9, and it was found that there was a stretch ratio of about 3.3:1 on the surface.

Figures 6 and 7

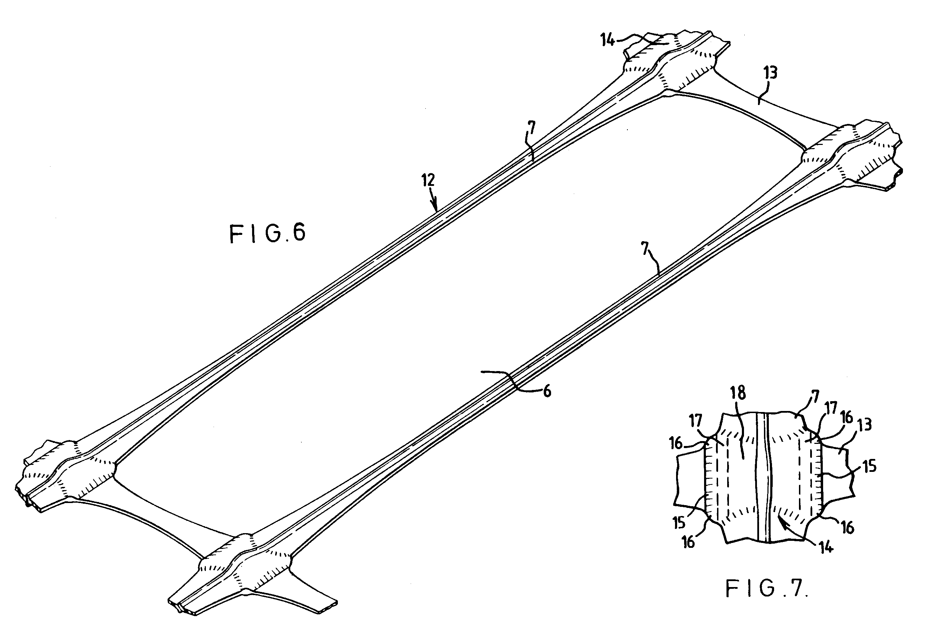

In Figure 6, the uniax geogrid 5 of Figure 3 has been stretched transversely 3:1 overall to form a biax geogrid 12. Although not shown, it is preferred to increase the transverse pitch of the starting material 1; increasing the transverse pitch slightly alters the a:b ratio and the mean thickness ratio, and provides a sufficient transverse dimension in the zone b to ensure that a significant strand is formed without interfering with the junction 9.

In effect, the oriented strands 7, and particularly the junctions 9, of Figure 3 have not been interfered with and there is no substantial change at any point along the continuous lengths of the strands 7. However, the interconnecting elements 3 have been stretched out with orientation being initiated in the centres of the elements 3, to form transverse oriented strands 13, thereby increasing the area of the geogrid and reducing the weight of plastics material per unit area. One of the junctions so produced is shown in Figure 7. The centre part 14 is oriented only in the direction of first stretch, and there are transversely oriented lateral parts 15, a small zone 16 of unoriented or less oriented material at each corner, and a small zone 17 of substantially unoriented or less oriented material running down each side, dividing the lateral part 15 from the longitudinally oriented centre part 14. In practice, the material of the zone 17 may be slightly oriented, either in the longitudinal or transverse direction, or biaxially, but the effect is as though there were no orientation.

### Figures 8 to 14

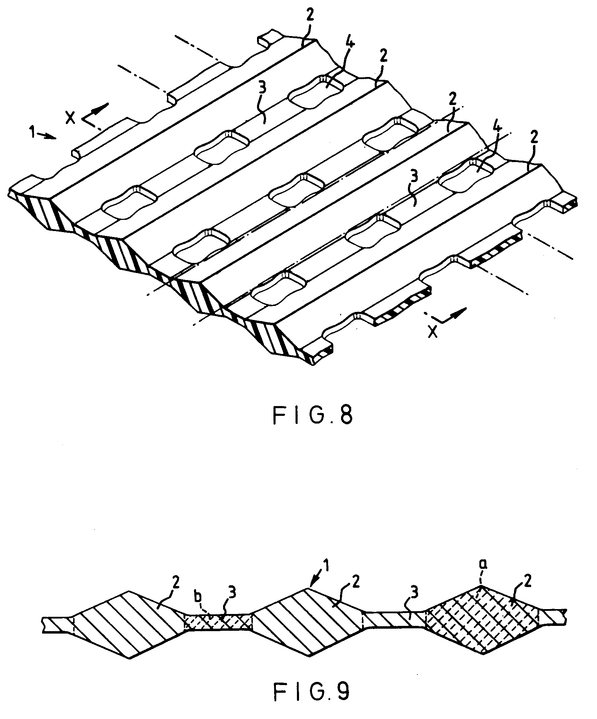

The starting material 1 shown in Figures 8 and 9 has relatively wide longitudinal protuberances or ribs which comprise the longitudinal elements 2. The longitudinal elements 2 have sides which are shown as sloping at about 36°, the centre being about 400% thicker than the lateral edges (at the longitudinal tangent lines). Apart from the very ends, the interconnecting elements 3 are parallel-faced. The major part of each hole 4 is formed in the parallel-faced part, but the edges of the holes 4 extend slightly into the edges of the ribs. Specific examples of this type of starting material are given in columns 1 to 5 of Table 2 below.

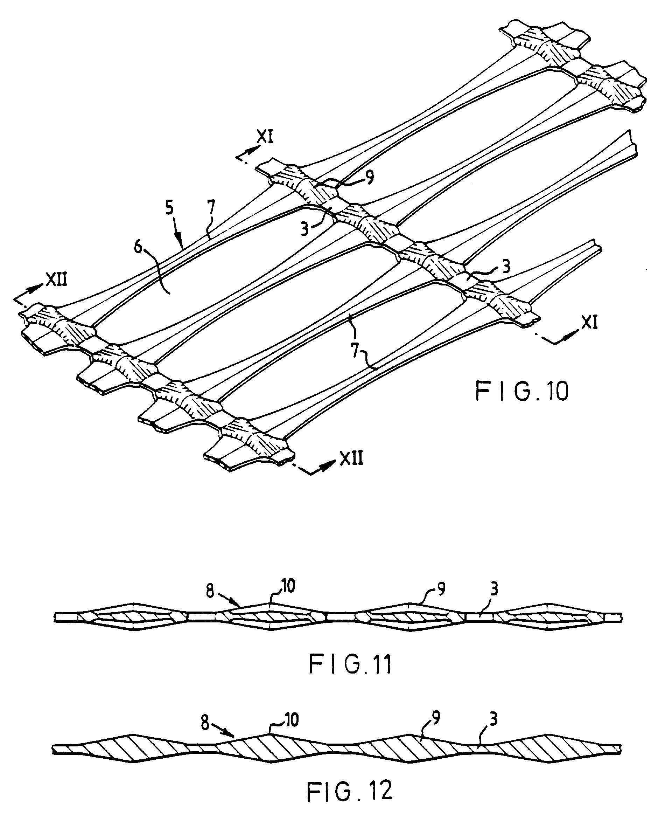

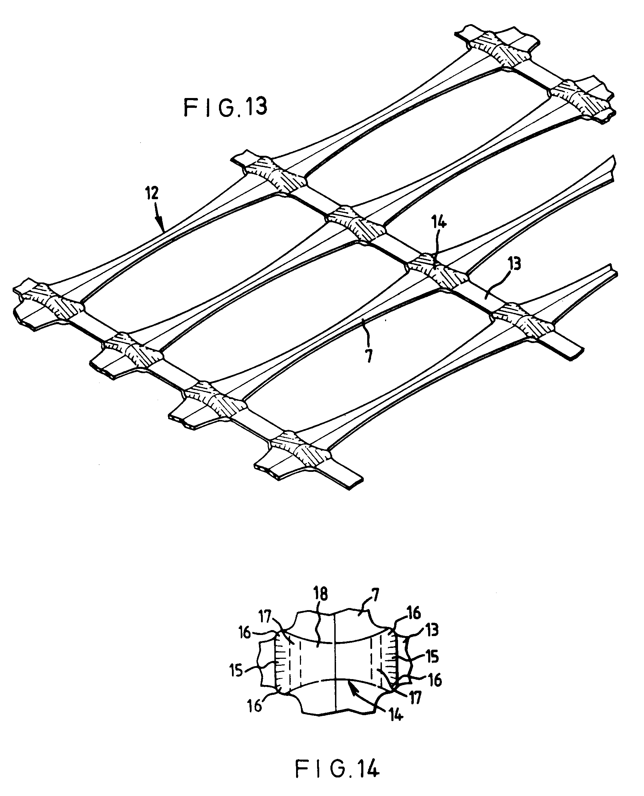

The starting material 1 was stretched longitudinally to an overall stretch ratio of 6:1 (about 11:1 on the strands), producing the uniax geogrid 5 of Figure 10. The biax geogrid 12 of Figure 13 was produced by stretching the structure 5 transversely 1.42:1 overall.

### Figures 15 to 19

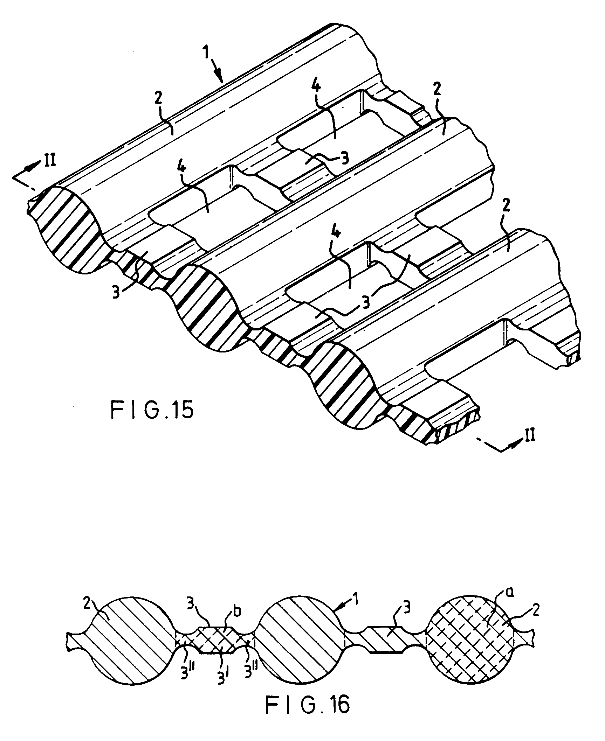

The starting material 1 shown in Figures 15 and 16 has longitudinal elements 2 whose cross-section is generally circular, thereby providing thicker, central, longitudinally-extending portions; the circular profile is radiussed into the interconnecting elements 3. The section of the interconnecting element 3 provides a central mass 3' in the form of a thicker portion for providing anchorage or abutment when the geogrid is in the ground; on either side of the thicker portion 3', there are thinner portions 3'' which act as hinges to prevent splitting forces being applied to the longitudinal strands 7. In the starting material 1, the ratio of the thickness of the longitudinal elements 2 (measured at the thickest point in the cross-section shown) to the thickness of the hinge portions 3'' (measured at the thinnest points in the sections shown) is preferably less than about 10:1 and preferably more than about 5:1, preferably about 6:1 - Figure 16 shows a ratio of 6.35:1.

The tangent line runs where the circular profile of the longitudinal element 2 just begins to be radiussed into the hinge portion 3''. The holes 4 are rectangular with radiussed corners, and may for instance be 12.7 mm wide.

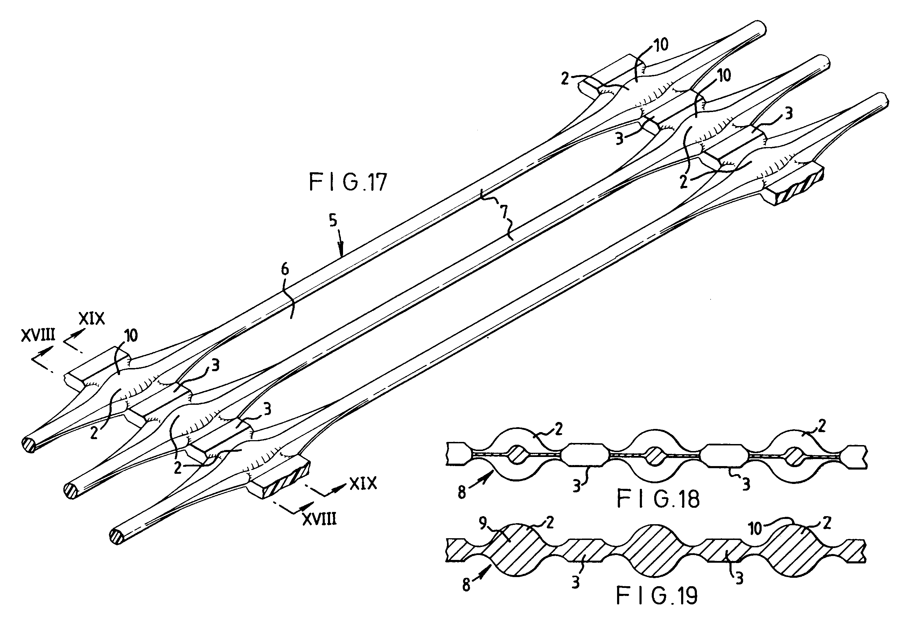

The starting material 1 was stretched longitudinally to an overall stretch ratio of 5.5:1, producing the uniax geogrid 5 of Figure 17.

### Figures 20 to 22

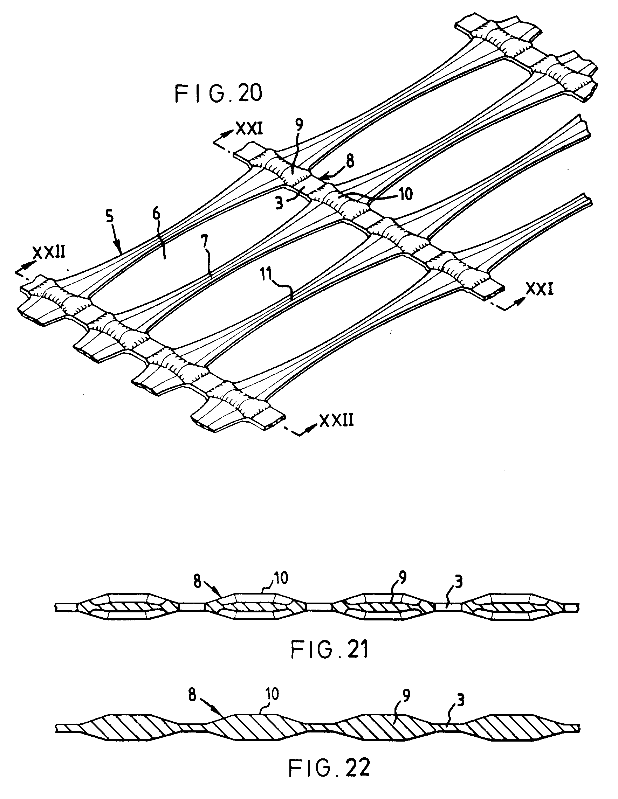

In Figure 20, the longitudinal elements 2 have flat tops, which assist heating the starting material 1 prior to stretching, when using flat pre-heat cylinders. Stretching was as for Figure 3.

### Figures 23 to 32

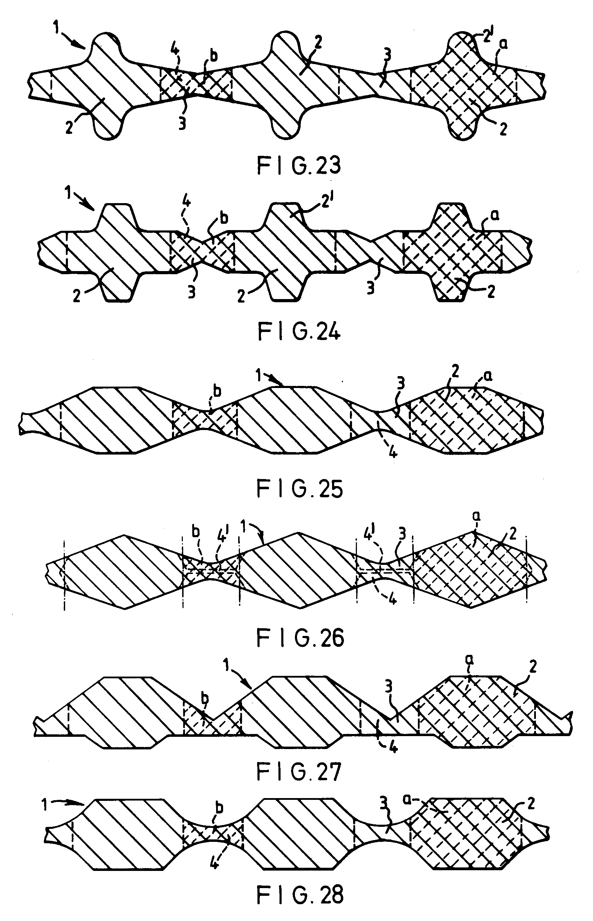

Figures 23 to 32 indicate various shapes that are possible for the starting material 1, apart from those already referred to above. The holes are diabolo-shaped holes as in Figure 1, except for Figure 26 where they are circular.

The starting material 1 of Figure 23 is very similar to that of Figures 1 and 2, but has a slightly larger lobe.

The starting material of Figure 24 is generally similar to that of Figure 23, but the rib 2' is somewhat larger and flat-topped, and the interconnecting elements 3 are more waisted, to provide good yield points for transverse stretching.

Figure 25 can be compared with Figure 9 (without grooving) and would give better yield points for subsequent transverse orientation to produce a biax geogrid.

Figure 26 shows a longitudinal element 2 whose sides have a slope of 21°, the cross-sectional shape being generally similar to that of Figure 25 but without the flat tops. The interconnecting elements 3 continue the slope of the longitudinal elements 2. The holes 4 are blind, having been formed by embossing, and have inclined sides, leaving a base 4' on the median plane. Thus the holes 4 are not vertical-sided, and the tangent line is as shown at the respective equivalent vertical-sided holes; the width of the equivalent vertical-sided holes is slightly narrower than where the holes 4 shown intersect the top and bottom faces.

Figure 27 shows interconnecting elements 3 off the median plane.

Figure 28 shows the interconnecting elements 3 and the sides of the longitudinal elements 2 defined by curved channels. This provides a defined yield point at the centre of the interconnecting element 3, for stretching transversely to form biax geogrids. The cross-section of the longitudinal element 2 is generally polygonal (octagonal) with two sides parallel to the plane of the material 1.

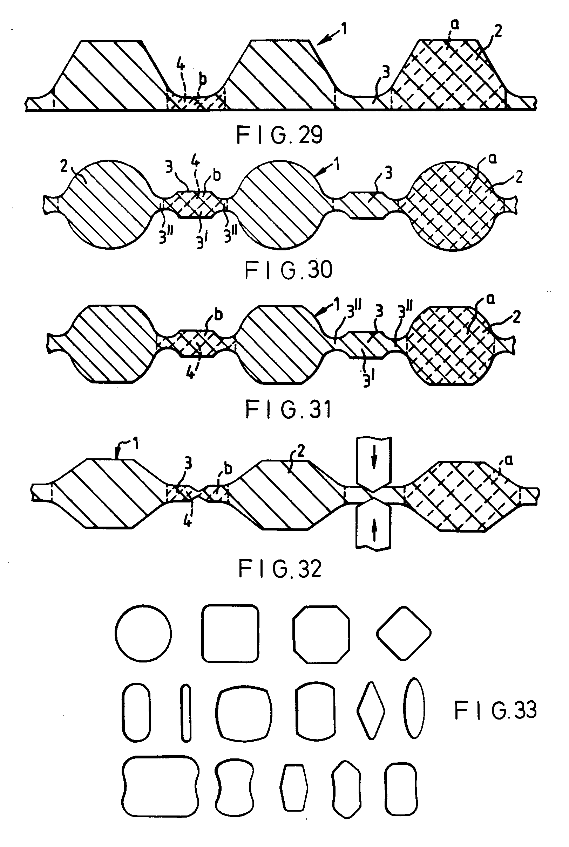

Figure 29 shows a starting material 1 somewhat similar to that of Figure 28, but with the interconnecting elements 3 against one face of the starting material 1. In general, the interconnecting elements 3 could be further displaced from the median plane.

Figure 30 shows a starting material whose pre-starting material (before punching) was exactly as shown in Figure 16. However, the holes 4 are narrower, causing the tangent line to run nearly through the thinnest point of the hinge portion 3".

Figure 31 shows a starting material 1 very similar to that of Figure 16, but the longitudinal elements 2 have flat tops and bottoms. The ratio of the thickness of the longitudinal elements 2 to the thinnest point of the hinge portion 3' is 5.7:1.

Figure 32 illustrates the use of grooving in order to provide well-defined yield points for transversely stretching structures to form biax structures. The longitudinal elements 2 can also be grooved if desired, preferably at the widest points of the holes 4. Grooving can be performed in polypropylene. It is not necessarily beneficial for all plastics materials.

Table 1

| Figure | Area ratio a:b | Mean thickness ratio a:b | Width: thickness ratio of a | Centre: edge thickness ratio of a |
|---|---|---|---|---|
| 1 or 2 | 3.57:1 | 2.1 :1 | 1.22:1 | 3.25:1 |
| 8 or 9 (Samples 1 to 4) | 2.68:1 | 1.67:1 | 1.68:1 | 1.88:1 |
| 8 or 9 (Sample 5) | 2.72:1 | 1.5 :1 | 1.72:1 | 1.93:1 |
| 15 or 16 | 3.2 :1 | 3.2:1 | 1.0 :1 | 4.6 :1 |
| 20 | 7.54:1 | 3.76:1 | 1.70:1 | 5.0 :1 |
| 23 | 3.58:1 | 2.15:1 | 1.13:1 | 3.1 :1 |
| 24 | 3.18:1 | 1.91:1 | 1.06:1 | 2.5 :1 |
| 25 | 4.95:1 | 2.97:1 | 1.72::1 | 1.67:1 |
| 26 | 4.28:1 | 2.67:1 | 1.52:1 | 2.33:1 |
| 27 | 4.6 :1 | 2.3 :1 | 1.65:1 | 2.0 :1 |
| 28 | 4.05:1 | 2.43:1 | 1.72:1 | 2.3 :1 |
| 29 | 7.54:1 | 3.88:1 | 1.68:1 | 3.33:1 |
| 30 | 4.0 :1 | 2.4 :1 | 1.25:1 | 6.35:1 |
| 31 | 3.0 :1 | 3.0 :1 | 1.17:1 | 4.20:1 |

Table 2

All the Samples were laboratory samples, except No 10, which was a production sample. The starting material of each Sample was formed of HDPE. There was full restraint for Samples 1, 2, 4 and 5. The hole sizes are as follows:

diabolo - length 15.9 mm, maximum width 9.5 mm, centre width 9.0 mm;

hexagon - as in Figure 33, bottom row, third from left, length 15.9 mm, width 9.5 mm.

rectangle - length 15.875 mm, width 9.525 mm.

For each sample, the strand mid-point thickness was its minimum thickness. A dash indicates that the parameter was not available.

EP 0 418 104 B1

Table 2

| Sample No | 1 | 2 | 3 | 4 | 5 | 6 | 7 | 8 | 9 | 10 |
|---|---|---|---|---|---|---|---|---|---|---|
| Figure | Fig 8 | Fig 8 | Fig 8 | Fig 8 | Fig 8 | Fig 23 | Fig 24 | Fig 28 | Fig 16 | Flat |
| Maximum thickness (mm) | 9.4 | 9.4 | 9.4 | 9.4 | 9.2 | 14.0 | 15.0 | 9.2 | 12.7 | 6.0 |
| Mean thickness zone $\underline{a}$ (mm) | 7.2 | 7.2 | 7.2 | 7.2 | 6.48 | 8.06 | 9.20 | 8.5 | 10.0 | 6.0 |
| Mean thickness zone $\underline{b}$ (mm) | 4.4 | 4.4 | 4.4 | 4.4 | 4.27 | 3.75 | 4.80 | 3.49 | 3.1 | 6.0 |
| Area of zone $\underline{a}$ ($mm^2$) | 114.3 | 114.3 | 114.3 | 114.3 | 110.7 | 128.02 | 146.11 | 135.12 | 126.6 | 95.25 |
| Area of zone $\underline{b}$ ($mm^2$) | 42.6 | 42.6 | 42.6 | 42.6 | 40.7 | 35.71 | 45.91 | 33.3 | 39.6 | 57.15 |
| Equivalent thickness (mm) | 6.0 | 6.0 | 6.0 | 6.0 | 5.8 | 6.45 | 7.5 | 6.6 | 6.5 | 6.0 |
| Weight unpunched $kg/m^2$ | 5.68 | 5.68 | 5.68 | 5.68 | 5.5 | 6.11 | 7.1 | 6.25 | 6.15 | 5.68 |
| Hole shape | Diabolo | Diabolo | Diabolo | Diabolo | Diabolo | Diabolo | Hexagon | Diabolo | Rectangle | Diabolo |
| Weight after punching $kg/m^2$ | 5.0 | 5.0 | 5.0 | 5.0 | 4.84 | 5.5 | 6.43 | 5.68 | 5.43 | 4.71 |
| Punchout % w/w | 12 | 12 | 12 | 10.9 | 12.0 | 10.0 | 9.4 | 9.0 | 11.7 | 17.1 |
| Transverse punchout (%) | 38 | 38 | 38 | 38 | 38 | 38 | 38 | 38 | 50.0 | 38 |

Table 2 (continued)

| Sample No | 1 | 2 | 3 | 4 | 5 | 6 | 7 | 8 | 9 | 10 |
|---|---|---|---|---|---|---|---|---|---|---|
| Bar length (mm) | 15.9 | 15.9 | 15.9 | 19.1 | 15.9 | 15.9 | 15.9 | 15.9 | 15.9 | 15.9 |
| Overall stretch ratio | 5.5:1 | 6.0:1 | 6.0:1 | 5.5:1 | 6.0:1 | 6.0:1 | 5.5:1 | 6.0:1 | 5.5:1 | 4.7:1 |
| Geogrid junction centre thickness (mm) | 8.0 | 7.4 | 8.34 | 8.5 | 8.1 | 9.1 | 10.24 | 7.79 | 7.94 | 5.65 |
| Reduction of junction centre thickness (%) | 15.0 | 21.3 | 11.3 | 9.6 | 12.0 | 35.0 | 31.7 | 15.3 | 37.5 | 5.8 |
| Geogrid weight (kg/m$^2$) | 0.9 | 0.83 | 0.83 | 0.92 | 0.86 | 1.21 | 1.39 | 1.14 | 1.16 | 1.10 |
| Strand strength (kN) | -- | 3.58 | -- | -- | 3.45 | 3.5 | 4.2 | 3.6 | 3.55 | 2.62 |
| Geogrid strength (kN/m) | -- | 147 | -- | -- | 141 | 192 | 201 | 176 | 171 | 110 |
| Peak strain (%) | -- | --- | -- | -- | 12.9 | 9.8 | 13.3 | 11.0 | 14.0 | 11.2 |
| Economy rating (kN/m/kg/m$^2$) | -- | 177 | -- | -- | 164 | 159 | 145 | 154 | 147 | 100 |
| Mid-point thickness of strand on centre line (mm) | -- | -- | -- | -- | 3.0 | 5.1 | 4.95 | 3.22 | 4.74 | 2.1 |
| Minimum thickness of interconnecting element (mm) | 4.4 | 4.4 | 4.4 | 4.4 | 4.2 | 3.0 | 3.0 | 3.0 | 2.0 | 6.0 |

Figure 33

The hole can be any suitable shape and some preferred shapes are shown in Figure 33. Preferred shapes are square or rectangular with radiussed corners, round, elliptical, barrel, diamond with radiussed corners, hexagonal, octagonal, diabolo, diabolo with extended ends, or round-ended elongate.

Figure 34

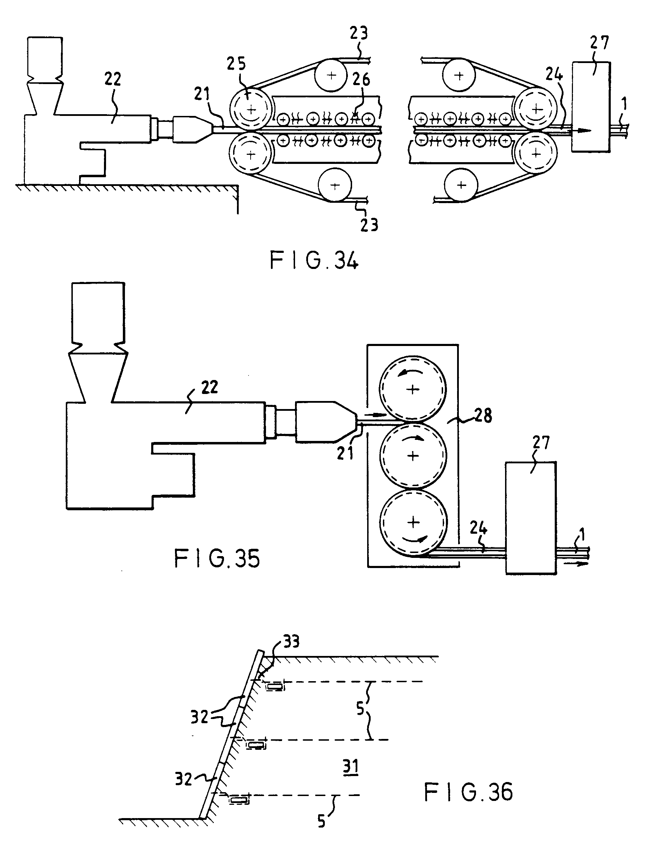

Figure 34 shows a commercial plant for producing the starting material. A thick web 21 is extruded by an extruder 22 and passes directly, whilst still hot, between continuous circulating belts 23 at least one of which is profiled to form a profiled pre-starting material 24 without holes. The belts 23 can be in the form of a series of metal plates. After passing through initial nip rolls 25, the belts 23 and the web 21 are cooled by coolers 26. The pre-starting material 24 exits directly into a press tool 27 for punching the holes 4 in thin portions of the material 24, thereby forming the starting material 1. The starting material 1 can then be stretched in the machine direction to form a uniax grid and stretched in the transverse direction to form a biax geogrid, as shown in Figure 11a of U.S. 4 374 798.

Figure 35

Figure 35 shows another commercial plant for producing the starting material 1. The extruder 22 extrudes the web 21 directly into a cooling callender roll stack 28 having two nips formed by three profiled rolls, each of the rolls having circumferential groove forms defining the required profile.

Figure 36

Figure 36 shows the use of uniax geogrids 5 in accordance with the invention to reinforce an embankment 31. Many different arrangements are possible. The geogrids 5 can be connected to individual facing panels 32 by casting short geogrids 33 into the facing panels 32 and connecting the short geogrids 33 to the geogrids 5 as described in GB-A-2 078 833 (as illustrated); alternatively, other connecting means can be used; or the geogrids can be used without connection to the facing or with no facing, or could be wrapped around the facing and then taken back into the soil as in Figure 14 of US 4 374 798.

The present invention has been described above purely by way of example, and modifications can be made within the invention.

**Claims**

**1.** A method of producing a geogrid (5), comprising:

providing an integral plastics starting material (1) which is substantially unoriented apart from any melt-flow orientation which may be present, which starting material (1) has a thickness of at least 6 mm at its thickest point, and which starting material (1) has spaced, parallel, continuous longitudinal elements (2) and between the longitudinal elements (2), interconnecting elements (3) interconnecting the longitudinal elements (2), there being a plurality of interconnecting elements (3) spaced along the length of each longitudinal element (2), the interconnecting elements (3) and the longitudinal elements (2) defining holes (4), notional starting material junction zones being defined between notional longitudinal tangent lines extending parallel to the longitudinal elements (2) and tangent to respective holes (4), and notional transverse tangent lines extending parallel to the interconnecting elements (3) and tangent to respective holes (4), the notional longitudinal tangent lines defining the lateral edges of the longitudinal elements (2), and stretching the starting material (1) in a direction parallel to the longitudinal elements (2) to stretch the longitudinal elements (2) into continuous, substantially uniaxially-oriented strands (7) with the orientation extending substantially parallel to the axes of the strands (7) substantially throughout the length of the strands (7) and form a mesh structure (5) in which mesh openings (6) are defined by a grid comprising the interconnecting elements (3) and the continuous oriented strands (7), there being a plurality of interconnecting elements (3) spaced along the length of each continuous oriented strand (7), the stretching being continued until the centres (10) of the notional junction zones (9) have reduced in thickness by at least about 9.6%, the stretching being terminated while the centres (10) of the notional junction zones (9) have undergone a percentage reduction in thickness substantially less than the percentage reduction in thickness of a said strand (7) entering the respective notional junction zone (9), as measured midway between respective notional junction zones (9), characterised in that the mean thickness of the longitudinal elements (2) is substantially greater than the mean thickness of the interconnecting elements (3) as seen in section normal to the starting material (1) along the axes of the centre lines of the interconnecting elements (3), and the area (a) of the longitudinal elements (2) is at least 2.5 times the area (b) of the interconnecting elements (3) as seen in said section.

2. A method of producing a geogrid (12), comprising:

providing an integral plastics starting material (1) which is substantially unoriented apart from any melt flow orientation which may be present, which starting material (1) has a thickness of at least 6 mm at its thickest point, and which starting material (1) has spaced, parallel, continuous longitudinal elements (2) and between the longitudinal elements (2), interconnecting elements (3) interconnecting the longitudinal elements (2), there being a plurality of interconnecting elements (3) spaced along the length of each longitudinal element (2), the interconnecting elements (3) and the longitudinal elements (2) defining holes (4), notional starting material junction zones being defined between notional longitudinal tangent lines extending parallel to the longitudinal elements (2) and tangent to respective holes (4), and notional transverse tangent lines extending parallel to the interconnecting elements (3) and tangent to respective holes (4), the notional longitudinal tangent lines defining the lateral edges of the longitudinal elements (2), and stretching the starting material (1) in a direction parallel to the longitudinal elements (2) and in a direction parallel to the interconnecting elements (3) to stretch the longitudinal elements (2) into continuous, substantially uniaxially-oriented strands (7) with the orientation extending substantially parallel to the axes of the strands (7) substantially throughout the length of the strands (7) and to stretch the interconnecting elements (3) into interconnecting oriented strands (13) and form a biaxially-oriented mesh structure (12) in which mesh openings (6) are defined by a grid comprising the continuous oriented strands (7) and the interconnecting strands (13), there being a plurality of interconnecting strands (13) spaced along the length of each continuous oriented strand (7), the stretching in said direction parallel to the longitudinal elements (2) is continued until the centres (10) of the notional junction zones (9) have reduced in thickness by at least about 9.6%, the stretching being terminated while the centres (10) of the notional junction zones (9) have undergone a percentage reduction in thickness substantially less than the percentage reduction in thickness of a said continuous strand (7) entering the respective notional junction zone (9), as measured midway between respective notional junction zones (9), characterised in that the mean thickness of the longitudinal elements (2) is substantially greater than the mean thickness of the interconnecting elements (3) as seen in section normal to the starting material (1) along the axes of the centre lines of the interconnecting elements (3), and the area (a) of the longitudinal elements (2) is at least 2.5 times the area (b) of the interconnecting elements (3) as seen in said section.

3. The method of Claim 2, wherein the starting material (1) is stretched sequentially, being stretched first in said direction parallel to the longitudinal elements (2).

4. The method of Claim 2, wherein the starting material (1) is stretched sequentially, being stretched first in the direction parallel to the interconnecting elements (3).

5. The method of any of the preceding Claims, wherein the parts of the longitudinal elements (2) which extend across the notional junction zones (9) have a longitudinally-extending portion (2') which is substantially thicker than a lateral edge of said part, as seen in said section.

6. The method of Claim 5, wherein the ratio of the thickness of said longitudinally-extending portion (2') to the thickness of a lateral edge of the longitudinal element (2), is at least about 1.5:1, as seen in said section.

7. The method of Claim 5 or 6, wherein said longitudinally-extending portion (2') is substantially thicker than both lateral edges of the longitudinal element (2), as seen in said section.

8. The method of any of Claims 5 to 7, wherein said longitudinally-extending portion (2') comprises a longitudinally-extending protuberance (2') on at least one face of the starting material (1).

9. The method of any of Claims 5 to 8, wherein substantial surfaces on either side of the thickest point (2') of the longitudinal element (2) slope down towards the lateral edges of the longitudinal element (2), as seen in said section.

10. The method of any of Claims 1 to 4, wherein the cross-sectional shape of a longitudinal element (2) is approximately regular polygonal or approximately circular.

**11.** The method of any of the preceding Claims, wherein the respective interconnecting elements (3) define a thin portion (3'') close to the lateral edge of the longitudinal element (2).

**12.** The method of Claim 11, wherein the ratio of the thickest point of the longitudinal element (2) to the thinnest point of said thin portion (3'') is at least about 5:1, as seen in said section.

**13.** The method of any of the preceding Claims, wherein the interconnecting elements (3) have a mid-portion (3') which is substantially thicker than portions (3'') on either side thereof, as seen in said section.

**14.** The method of any of the preceding Claims, wherein the median plane of the interconnecting elements (3) is coincident with or internally of the highest point of the outermost part of the respective face of the longitudinal element (2).

**15.** The method of any of the preceding Claims, wherein the ratio of the mean thickness of the longitudinal elements (2) to the mean thickness of the interconnecting elements (3) is at least about 1.5:1, as seen in said section.

**16.** The method of any of the preceding Claims, wherein the ratio of the width of the longitudinal element (2) to its thickness is not greater than about 1.75:1, as seen in said section.

**17.** The method of any of the preceding Claims, wherein the longitudinal elements (2) are of substantially uniform section.

**18.** The method of any of the preceding Claims, wherein, in the notional junction zones (9) of the geogrid (5, 12), as seen in section normal to the geogrid (5,12) along the central line of a respective strand (7) formed by stretching parallel to the longitudinal elements (2), there is a continuous increase in thickness up to the central zone (10) of the notional junction zone (9), with no dip in the notional junction zone (9).

**19.** A method of strengthening soil, comprising embedding in the soil a geogrid (5,12) made by the method of any of the preceding Claims.

## Patentansprüche

**1.** Eine Methode zur Herstellung eines im Erdbau anwendbaren Gitters (5) , welche die Bereitstellung eines integral aus Kunststoff bestehenden Ausgangsmaterials (1) vorsieht, welches im wesentlichen unorientiert ist, ausgenommen eine etwaige Schmelzflußorientierung welche möglicherweise vorhanden sein kann, wobei das Ausgangsmaterial (1) eine Dicke von wenigstens 6 mm an seiner dicksten Stelle besitzt und wobei dasselbe Ausgangsmaterial (1) in Abständen voneinander angeordnete parallele kontinuierliche Längselemente (2) sowie zwischen den Längselementen (2) vorgesehene Verbindungselemente (3) aufweist, welch letztere die Längselemente (2) miteinander verbinden, während eine Vielzahl von Verbindungselementen (3) vorhanden ist und sich in Abständen entlang der Längsausdehnung eines jeden Längselementes (2) erstreckte, und die Verbindungselemente (3) mit den Längselementen (2) Löcher (4) begrenzen, wobei imaginäre Verbindungszonen des Ausgangsmaterials zwischen imaginären longitudinalen tangentialen Linien definiert sind, welche sich parallel zu den Längselementen (2) und tangential zu den respektiven Löchern (4) ausbreiten, während imaginäre tranversale tangentiale Linien sich parallel zu den Verbindungselementen (3) und tangential zu den respektiven Löchern (4) ausbreiten, wobei die imaginären longitudinalen tangentialen Linien die seitlichen Ränder der Längselemente (2) definieren; sowie das Strecken des Ausgangsmaterials (1) in einer parallel zu den Längselementen (2) verlaufenden Richtung, um die Längselemente (2) zu kontinuierlichen, im wesentlichen einachsig orientierten Rippen (7) zu dehnen, wobei die Orientierung im wesentlichen parallel zu den Achsen der Rippen (7) verläuft sowie sich im wesentlichen über die ganze Länge der Rippen (7) erstreckt. und um eine Netzstruktur (5) zu bilden, bei welcher Maschenöffnungen (6) durch ein Gitter begrenzt werden welches die Verbindungselemente (3) und die kontinuierlichen orientierten Rippen (7) umfaßt, während eine Vielzahl an Verbindungselementen (3) vorhanden ist und sich in Abständen entlang der Längsausdehnung einer jeden kontinuierlichen orientierten Rippe (7) erstreckt, wobei das Strecken fortgesetzt wird bis die Zentren (10) der imaginären Verbindungszonen (9) in ihrer

EP 0 418 104 B1

Dicke um wenigstens ungefähr 9,6% abgenommen haben und das Strecken beendet wird wenn die Zentren (10) der imaginären Verbindungszonen (9) eine prozentuale Dickenabnahme erfahren haben welche im wesentlichen geringer ist als die prozentuale Dickenabnahme der besagten Rippe (7) beim Übergang in die respektive imaginäre Verbindungszone (9), was auf dem halben Weg zwischen den respektiven imaginären Verbindungszonen (9) gemessen wird, dadurch gekennzeichnet, daß die mittlere Dicke der Längselemente (2) wesentlich größer ist als die mittlere Dicke der Verbindungselemente (3), wie sich aus dem Querschnitt senkrecht durch das Ausgangsmaterial (1) entlang den Achsen der Zentrallinien der Verbindungselemente (3) ergibt, und dadurch daß die Fläche (a) der Längselemente (2) wenigstens 2,5 Mal die Fläche (b) der Verbindungselemente (3) beträgt, wie aus dem besagten Querschnitt ersichtlich ist.

2. Eine Methode zur Herstellung eines im Erdbau anwendbaren Gitters (5), welche die Bereitstellung eines integral aus Kunststoff bestehenden Ausgangsmaterials (1) vorsieht, welches im wesentlichen unorientiert ist, ausgenommen eine etwaige Schmelzflußorientierung welche möglicherweise vorhanden sein kann, wobei das Ausgangsmaterial (1) eine Dicke von wenigstens 6 mm an seiner dicksten Stelle besitzt und wobei dasselbe Ausgangsmaterial (1) in Abständen voneinander angeordnete parallele kontinuierliche Längselemente (2) sowie zwischen den Längselementen (2) vorgesehene Verbindungselemente (3) aufweist, welch letztere die Längselemente (2) miteinander verbinden, während eine Vielzahl von Verbindungselementen (3) vorhanden ist und sich in Abständen entlang der Längsausdehnung eines jeden Längselementes (2) erstreckt, und die Verbindungselemente (3) mit den Längselementen (2) Löcher (4) begrenzen, wobei imaginäre Verbindungszonen des Ausgangsmaterials zwischen imaginären longitudinalen tangentialen Linien definiert sind, welche sich parallel zu den Längselementen (2) und tangential zu den respektiven Löchern (4) ausbreiten, während imaginäre tranversale tangentiale Linien sich parallel zu den Verbindungselementen (3) und tangential zu den respektiven Löchern (4) ausbreiten, wobei die imaginären longitudinalen tangentialen Linien die seitlichen Ränder der Längselemente (2) definieren; sowie das Strecken des Ausgangsmaterials (1) in einer parallel zu den Längselementen (2) verlaufenden Richtung und in einer parallel zu den Verbindungselementen (3) verlaufenden Richtung, um die Längselemente (2) zu kontinuierlichen, im wesentlichen einachsig orientierten Rippen (7) zu dehnen, wobei die Orientierung im wesentlichen parallel zu den Achsen der Rippen (7) verläuft sowie sich im wesentlichen über die ganze Länge der Rippen (7) erstreckt, und um die Verbindungselemente (3) zu verbindenden orientierten Rippen (13) zu dehnen und um eine biaxial orientierte Netzstruktur (12) zu bilden, bei welcher Maschenöffnungen (6) durch ein Gitter begrenzt werden welches die kontinuierlichen orientierten Rippen (7) und die verbindenden Rippen (13) umfaßt, während eine Vielzahl von verbindenden Rippen (13) vorhanden ist und sich in Abständen entlang der Längsausdehnung einer jeden kontinuierlichen orientierten Rippe (7) erstreckt, wobei das Strecken in besagter Richtung, parallel zu den Längselementen (2), fortgeführt wird bis die Zentren (10) der imaginären Verbindungszone (9) in ihrer Dicke um wenigstens ungefähr 9,6% abgenommen haben und das Strecken beendet wird wenn die Zentren (10) der imaginären Verbindungszonen (9) eine prozentuale Dickenabnahme erfahren haben welche wesentlich geringer ist als die prozentuale Dickenabnahme der besagten kontinuierlichen Rippe (7) beim Übergang in die respektive imaginäre Verbindungszone (9), was auf halbem Wege zwischen den respektiven imaginären Verbindungszonen (9) gemessen wird, dadurch gekennzeichnet, daß die mittlere Dicke der Längselemente (2) wesentlich größer ist als die mittlere Dicke der Verbindungselemente (3), wie sich aus dem Querschnitt senkrecht durch das Ausgangsmaterial (1) entlang den Achsen der Zentrallinien der Verbindungselemente (3) ergibt, und dadurch daß die Fläche (a) der Längselemente (2) wenigstens 2,5 Mal die Fläche (b) der Verbindungselemente (3) beträgt, wie aus dem besagten Querschnitt ersichtlich ist.

3. Die Methode gemäß Anspruch 2, wobei das Ausgangsmaterial (1) sukzessive gestreckt wird, wobei die Streckung zuerst in der besagten Richtung, parallel zu den Längselementen (2) erfolgt.

4. Die Methode gemäß Anspruch 2, wobei das Ausgangsmaterial (1) sukzessive gestreckt wird, wobei die Streckung zuerst in der Richtung parallel zu den Verbindungselementen (3) erfolgt.

5. Die Methode gemäß dem einen oder anderen der vorhergehenden Ansprüche, wobei die Teile der Längselemente (2), welche sich quer über die imaginären Verbindungszonen (9) ausbreiten, ein sich in Längsrichtung erstreckendes Stück (2') haben, welches wesentlich dicker ist als ein seitlicher Rand des besagten Teiles, wie aus dem besagten Querschnitt ersichtlich ist.

**6.** Die Methode gemäß Anspruch 5, wobei das Verhältnis der Dicke des besagten sich in Längsrichtung erstreckenden Stückes (2') zu der Dicke eines seitlichen Randes des Längselementes (2), wenigstens ungefähr 1,5:1 beträgt, wie aus dem besagten Querschnitt ersichtlich ist.

**7.** Die Methode gemäß Anspruch 5 oder 6, wobei das besagte sich in Längsrichtung erstreckende Stück (2') wesentlich dicker ist als beide seitlichen Ränder des Längselementes (2), wie aus dem besagten Querschnitt ersichtlich ist.

**8.** Die Methode gemäß irgendeinem der Ansprüche 5 bis 7, wobei das besagte, sich in Längsrichtung erstreckende Stück (2') einen sich ebenfalls in Längsrichtung erstreckenden Höcker (2') auf wenigstens einer Seite des Ausgangsmaterials (1) umfaßt.

**9.** Die Methode gemäß irgendeinem der Ansprüche 5 bis 8, wobei wesentliche Flächen auf den beiden Seiten des dicksten Punktes (2') des Längselementes (2) nach unten in Richtung auf die seitlichen Ränder des Längselementes (2) hin geneigt sind, wie aus dem besagten Querschnitt ersichtlich ist.

**10.** Die Methode gemäß irgendeinem der Ansprüche 1 bis 4, wobei die Querschnittsform eines Längselementes (2) annähernd regelmäßig polygonal oder annähernd kreisförmig ist.

**11.** Die Methode gemäß dem einen oder anderen der vorhergehenden Ansprüche, wobei die respektiven Verbindungselemente (3) ein dünnes Stück (3'') nahe an dem seitlichen Rand des Längselementes (2) definieren.

**12.** Die Methode gemäß Anspruch 11, wobei das Verhältnis des dicksten Punktes des Längselementes (2) zu dem dünnsten Punkt des besagten dünnen Stückes (3'') wenigstens ungefähr 5:1 beträgt, wie aus dem besagten Querschnitt ersichtlich ist.

**13.** Die Methode gemäß dem einen oder anderen der vorhergehenden Ansprüche, wobei die Verbindungselemente (3) ein Mittelstück (3') aufweisen, welches wesentlich dicker ist als die Stücke (3'') beiderseits davon, wie aus dem besagten Querschnitt ersichtlich ist.

**14.** Die Methode gemäß dem einen oder anderen der vorhergehenden Ansprüche, wobei die mittlere Fläche der Verbindungselemente (3) sich mit dem höchsten Punkt des äußersten Teiles der respektiven Fläche des Längselementes (2) deckt, oder innerhalb desselben liegt.

**15.** Die Methode gemäß dem einen oder anderen der vorhergehenden Ansprüche, wobei das Verhältnis der mittleren Dicke des Längselementes (2) zu der mittleren Dicke der Verbindungselemente (3) wenigstens ungefähr 1,5:1 beträgt, wie aus dem besagten Querschnitt ersichtlich ist.

**16.** Die Methode gemäß dem einen oder anderen der vorhergehenden Ansprüche, wobei das Verhältnis der Breite des Längselementes (2) zu seiner Dicke nicht größer ist als ungefähr 1,75:1, wie aus dem besagten Querschnitt ersichtlich ist.

**17.** Die Methode gemäß dem einen oder anderen der vorhergehenden Ansprüche, wobei die Längselemente (2) im wesentlichen einen gleichförmigen Querschnitt haben.

**18.** Die Methode gemäß dem einen oder anderen der vorhergehenden Ansprüche, wobei in der imaginären Verbindungszone (9) des im Erdbau anwendbaren Gitters (5, 12), wie aus dem Querschnitt der senkrecht zu dem im Erdbau anwendbaren Gitters (5, 12) steht ersichtlich ist, entlang der zentralen Linie einer respektiven Rippe (7), welche durch Streckung parallel zu den Längselementen geformt worden ist, eine kontinuierliche Dickenzunahme hin zu der zentralen Zone (10) der imaginären Verbindungszone (9) auftritt, ohne Neigung in der imaginären Verbindungszone (9).

**19.** Eine Methode zur Bodenverstärkung, welche das Einbetten in den Boden eines im Erdbau anwendbaren Gitters (5, 12) umfaßt, welches nach der Methode des einen oder anderen der vorhergehenden Ansprüche hergestellt worden ist.

**Revendications**

1. Une méthode de production d'une grille (5) pour applications géotechniques, comprenant la mise à disposition d'un matériau de départ intégralement en plastique (1), qui est pour l'essentiel non-orienté, abstraction faite de toute orientation qui peut être présente à la suite de l'écoulement du bain de fusion, ce matériau de départ (1) étant d'une épaisseur d'au moins 6 mm à son point le plus épais et ce matériau de départ (1) possédant des éléments longitudinaux, continus, espacés et parallèles (2), et, disposés entre les éléments longitudinaux (2), des éléments d'interconnexion (3) raccordant entre eux les éléments longitudinaux (2), il y a une pluralité d'éléments d'interconnexion (3) qui sont prévus et espacés le long de l'étendue de chaque élément longitudinal (2), les éléments d'interconnexion (3) et les éléments longitudinaux (2) définissant des trous (4), des zones de jonction imaginaires du matériau de départ étant définies entre des lignes imaginaires longitudinales tangentes s'étendant parallèlement aux éléments longitudinaux (2) et tangentiellement par rapport aux trous respectifs (4), et des lignes imaginaires transversales tangentes s'étendant parallèlement aux éléments d'interconnexion (3) et tangentiellement par rapport aux trous respectifs (4), les lignes imaginaires longitudinales tangentes définissant les bords latéraux des éléments longitudinaux (2), ainsi que l'étirage du matériau de départ (1) dans une direction parallèle aux éléments longitudinaux (2) pour allonger les éléments longitudinaux (2) en des cordons continus à orientation essentiellement uniaxiale (7) avec une orientation s'étendant essentiellement en parallèle aux axes des cordons (7) et pour l'essentiel par-dessus toute l'étendue des cordons (7) ainsi que pour former une structure à maille (5) dans laquelle les ouvertures de maille (6) sont définies par une grille comprenant les éléments d'interconnexion (3) et les cordons continus orientés (7), il y a une pluralité d'éléments d'interconnexion (3) qui sont espacés le long de l'étendue de chaque cordon continu orienté (7), l'étirage étant continué jusqu'à ce que les centres (10) des zones de jonction imaginaires (9) soient réduits en épaisseur d'au moins environ 9,6%, l'étirage étant terminé quand les centres (10) des zones de jonction imaginaires (9) ont subi une réduction en épaisseur d'un pourcentage substantiellement inférieur au pourcentage de réduction en épaisseur d'un desdits cordons (7) à la transition à la zone de jonction imaginaire respective (9), tel que mesuré à mi-chemin entre les zones de jonction imaginaires respectives (9), caractérisé en ce que l'épaisseur moyenne des éléments longitudinaux (2) est sensiblement plus grande que l'épaisseur moyenne des éléments d'interconnexion (3), comme il ressort de la section transversale perpendiculaire à travers le matériau de départ (1) le long des axes des lignes centrales des éléments d'interconnexion (3), et en ce que l'aire ($\underline{a}$) des éléments longitudinaux (2) est au moins de 2,5 fois l'aire ($\underline{b}$) des éléments d'interconnexion (3), comme il ressort de ladite section.

2. Une méthode de production d'une grille (12) pour applications géotechniques, comprenant la mise à disposition d'un matériau de départ intégralement en plastique (1), qui est pour l'essentiel non-orienté, abstraction faite de toute orientation qui peut être présente à la suite de l'écoulement du bain de fusion, ce matériau de départ (1) étant d'une épaisseur d'au moins 6 mm à son point le plus épais et ce matériau de départ (1) possédant des éléments longitudinaux, continus, espacés et parallèles (2), et, disposés entre les éléments longitudinaux (2), des éléments d'interconnexion (3) raccordant entre eux les éléments longitudinaux (3), il y a une pluralité d'éléments d'interconnexion (3) qui sont prévus et espacés le long de l'étendue de chaque élément longitudinal (2), les éléments d'interconnexion (3) et les éléments longitudinaux (2) définissant des trous (4), des zones de jonction imaginaires du matériau de départ étant définies entre des lignes imaginaires longitudinales tangentes s'étendant parallèlement aux éléments longitudinaux (2) et tangentiellement par rapport aux trous respectifs (4), et des lignes imaginaires transversalement tangentes s'étendant parallèlement aux éléments d'interconnexion (3) et tangentiellement par rapport aux trous respectifs (4), les lignes imaginaires longitudinales tangentes définissant les bords latéraux des éléments longitudinaux (2), ainsi que l'étirage du matériau de départ (1) dans une direction parallèle aux éléments longitudinaux (2) et dans une direction parallèle aux éléments d'interconnexion (3) pour allonger les éléments longitudinaux (2) en des cordons continus à orientation essentiellement uniaxiale (7) avec une orientation s'étendant essentiellement en parallèle aux axes des cordons (7) et pour l'essentiel par-dessus toute l'étendue des cordons (7) ainsi que pour allonger les éléments d'interconnexion (3) en des cordons d'interconnexion orientés (13) et pour former une structure à maille orientée bi-axialement (12) dans laquelle les ouvertures de maille (6) sont définies par une grille comprenant les cordons continus orientés (7) et les cordons d'interconnexion (13), il y a une pluralité de cordons d'interconnexion (13) qui sont espacés le long de l'étendue de chaque cordon continu orienté (7), l'étirage dans ladite direction parallèle aux éléments longitudinaux (2) étant continué jusqu'à ce que les centres (10) des zones de jonction imaginaires (9) soient réduits en épaisseur d'au moins environ 9,6%, l'étirage étant terminé quand les centres (10) des zones de jonction imaginaires (9) ont subi une réduction en épaisseur d'un pourcentage substantiellement inférieur au pourcentage de réduction en épaisseur d'un desdits cordons (7) à la transition à la zone de jonction imaginaire respective (9), tel que mesuré à mi-chemin entre les zones de jonction imaginaires respectives (9), caractérisé en ce que l'épaisseur moyenne des éléments longitudinaux (2) est sensiblement plus grande que l'épaisseur moyenne des éléments d'interconnexion (3), comme il ressort de la section transversale perpendiculaire à travers le matériau de départ (1), le long des axes des lignes centrales des éléments d'interconnexion (3), et en ce que l'aire ($\underline{a}$) des éléments longitudinaux (2) est au moins 2,5 fois l'aire ($\underline{b}$) des éléments d'interconnexion (3), comme il ressort de ladite section.

3.  La méthode suivant revendication 2, dans laquelle le matériau de départ (1) est étiré successivement, celui-ci étant allongé d'abord dans ladite direction parallèle aux éléments longitudinaux (2).

4.  La méthode suivant revendication 2, dans laquelle le matériau de départ (1) est étiré successivement, celui-ci étant allongé d'abord dans la direction parallèle aux éléments d'interconnexion (3).

5.  La méthode suivant l'une ou l'autre des revendications précédentes, dans laquelle les parties des éléments longitudinaux (2) qui s'étendent à travers les zones de jonction imaginaires (9) ont une portion d'extension longitudinale (2') qui est sensiblement plus épaisse qu'un bord latéral de ladite partie, comme il ressort de ladite section.

6.  La méthode suivant revendication 5, dans laquelle le rapport entre l'épaisseur de ladite portion d'extension longitudinale (2') et l'épaisseur d'un bord latéral de l'élément longitudinal (2) est d'au moins environ 1,5:1, comme il ressort de ladite section.

7.  La méthode suivant revendication 5 ou 6, dans laquelle ladite portion d'extension longitudinale (2') est substantiellement plus épaisse que les deux bords latéraux de l'élément longitudinal (2), comme il ressort de ladite section.

8.  La méthode suivant l'une ou l'autre des revendications 5 à 7, dans laquelle ladite portion d'extension longitudinale (2') comprend une protubérance d'extension longitudinale (2') sur au moins une face du matériau de départ (1).

9.  La méthode suivant l'une ou l'autre des revendications 5 à 8, dans laquelle des aires substantielles de chaque coté du point le plus épais (2') de l'élément longitudinal (2) sont en pente en direction des bords latéraux de l'élément longitudinal (2), comme il ressort de ladite section.

10. La méthode suivant l'une ou l'autre des revendications 1 à 4, dans laquelle la forme de la coupe transversale d'un élément longitudinal (2) est approximativement à polygone régulier ou approximativement circulaire.

11. La méthode suivant l'une ou l'autre des revendications précédentes, dans laquelle les éléments d'interconnexion respectifs (3) définissent une fine portion (3'') près du bord latéral de l'élément longitudinal (2).

12. La méthode suivant revendication 11, dans laquelle le rapport entre le point le plus épais de l'élément longitudinal (2) et le point le plus mince de ladite fine portion (3'') est d'au moins environ 5:1, comme il ressort de ladite section.

13. La méthode de l'une ou l'autre des revendications précédentes, dans laquelle les éléments d'interconnexion (3) ont une portion moyenne (3') qui est sensiblement plus épaisse que les portions (3'') de chaque coté, comme il ressort de ladite section.

14. La méthode de l'une ou l'autre des revendications précédentes, dans laquelle le plan médian des éléments d'interconnexion (3) coïncide avec le point le plus élevé de la partie la plus à l''extérieur de la face respective de l'élément longitudinal (2) ou est situé à l'intérieur de celui-ci.

**15.** La méthode de l'une ou l'autre des revendications précédentes, dans laquelle le rapport entre l'épaisseur moyenne des éléments longitudinaux (2) et l'épaisseur moyenne des éléments d'interconnexion (3) est d'au moins environ 1,5:1, comme il ressort de ladite section.

**16.** La méthode de l'une ou l'autre des revendications précédentes, dans laquelle le rapport entre la largeur de l'élément longitudinal (2) et son épaisseur n'est pas plus grand qu'environ 1,75:1, comme il ressort de ladite section.

**17.** La méthode de l'une ou l'autre des revendications précédentes, dans laquelle les éléments longitudinaux (2) ont une coupe transversale essentiellement uniforme.

**18.** La méthode de l'une ou l'autre des revendications précédentes, dans laquelle il y a, par rapport aux zones de jonction imaginaires (9) de la grille pour applications géotechniques (5, 12), comme il ressort de la section perpendiculaire à la grille pour applications géotechniques (5, 12), le long de la ligne centrale d'un cordon respectif (7) formé par l'étirage parallèlement aux éléments longitudinaux (2), un accroissement continu en épaisseur vers la zone centrale (10) de la zone de jonction imaginaire (9), sans aucune pente dans la zone de jonction imaginaire (9).

**19.** Une méthode de renforcement du sol, comprenant la pose en pleine terre d'une grille pour applications géotechniques (5, 12), fabriquée suivant la méthode de l'une ou l'autre des revendications précédentes.

FIG 1

FIG. 2.

FIG.3

FIG.4.

FIG.5.

EP 0 418 104 B1

FIG.6

FIG.7.

FIG.8

FIG.9

F I G . 10

F I G . 11

FIG . 12

FIG.13

FIG.14

FIG.15

FIG.16

FIG.17

FIG.18

FIG.19

FIG.20

FIG.21

FIG.22

F I G. 23

F I G. 24

F I G. 25

F I G. 26

F I G. 27

F I G. 28

F I G. 29

F I G. 30

F I G. 31

F I G. 32

F I G. 33

FIG.34

FIG.35

FIG.36